**Europäisches Patentamt**

**European Patent Office**

**Office européen des brevets**

(11) Veröffentlichungsnummer: **0 119 289**
**A1**

(12) **EUROPÄISCHE PATENTANMELDUNG**

(21) Anmeldenummer: **83102776.8**

(22) Anmeldetag: **21.03.83**

(51) Int. Cl.³: **F 16 L 45/00,** F 16 L 55/10, F 16 L 55/12

(43) Veröffentlichungstag der Anmeldung: **26.09.84**
**Patentblatt 84/39**

(84) Benannte Vertragsstaaten: **AT BE CH DE FR GB IT LI LU NL SE**

(71) Anmelder: **Sallhofer, Hans, Dr., Bahnhofstrasse 36, A-5280 Braunau (AT)**

(72) Erfinder: **Sallhofer, Hans, Dr., Bahnhofstrasse 36, A-5280 Braunau (AT)**

(74) Vertreter: **Glawe, Delfs, Moll & Partner Patentanwälte, Postfach 26 01 62 Liebherrstrasse 20, D-8000 München 26 (DE)**

(54) Rohrmanschette mit durch Deckel verschliessbarem Zugangsstutzen für Rohrleitungen.

(57) Eine Rohrmanschette (1) mit durch Deckel verschließbarem Zugangsstutzen (2) für Rohrleitungen, insbesondere als Fühlstutzen für Mahlgutleitungen. Der Stutzen (2) ist rechtwinklig zur Rohrmanschette (1) und der Deckel (6) hat einen den Stutzen vollständig ausfüllenden Stopfen (7), dessen ausgerundete Stirnfläche (8) mit der Innenfläche der Rohrmanschette fluchtet, und ist am Stutzen z.B. durch Bajonettverschluß (10, 11) gesichert.

EP 0 119 289 A1

0119289

- 1 -

A 75

Dr. Hans Sallhofer
Bahnhofstr. 36
A-5280 Braunau

Rohrmanschette mit durch Deckel verschließbarem Zugangsstutzen für Rohrleitungen

### B e s c h r e i b u n g

Die Erfindung betrifft eine Rohrmanschette mit durch Deckel verschließbarem Zugangsstutzen für Rohrleitungen, insbesondere zur Verwendung als Inspektions- und Reinigungsverschluß für Laufrohre in Mühlenanlagen.

Rohrmanschetten der genannten Art werden insbesondere dazu verwendet, um die Laufrohre in Mühlenanlagen, in denen Mahlgut gefördert wird, an geeigneten Stellen mit einem verschließbaren Zugangsstutzen, einem sogenannten Fühlstutzen, zu versehen, durch den z.B. von Hand Proben des durch das Laufrohr fallenden Mahlgutes entnommen und besichtigt
werden können. Ferner kann durch diese Stutzen auch
ein Reinigungsgerät in die Rohrleitung eingeführt
werden.

Bei den bisher bekannten Rohrmanschetten dieser
Art geht der Fühlstutzen spitzwinklig entgegen der
Förderrichtung von der Rohrleitung ab und ist durch
einen flachen Deckel verschlossen, der durch Klemmsitz im Stutzen gehalten ist. Es hat sich dabei der
Nachteil gezeigt, daß der Stutzen einen Totraum bildet, in dem sich das durch die Rohrleitung fallende oder strömende Mahlgut oder sonstiges Fördergut
festsetzen kann. Dies ist insbesondere bei leicht verderblichem Fördergut nachteilig, da längere Zeit im
Stutzen verbliebene und verdorbene Anteile des Mahlgutes wieder in die Rohrleitung zurückfallen und sich
dem unverdorbenen Mahlgut beimischen können. Auch
die spitzwinklige Anordnung des Stutzens ist nachteilig, da sie die Einführung eines Reinigungsgerätes
in den stromauf liegenden Teil der Rohrleitung nicht
zuläßt. Ferner wurde erfindungsgemäß erkannt, daß
es notwendig ist, den Deckel am Stutzen zu sichern.
Dies ist insbesondere bei Rohrleitungen für explosions-

gefährdetes Mahlgut wichtig. Bei den üblichen, nicht gesicherten Deckel besteht die Gefahr, daß im Falle einer außerhalb des Laufrohrsystems ausgelösten Explosion der der Druckwelle folgende Unterdruck die Deckel der Fühlstutzen herausschleudern und das dann austretende Mahlgut zu einem sekundären Explosionsschlag führen kann.

Der Erfindung liegt die Aufgabe zugrunde, eine verbesserte Rohrmanschette der genannten Art insbesondere zur Verwendung als Fühlstutzen bei Laufrohren in Mühlenanlagen zu schaffen, bei dem die oben genannten Nachteile vermieden werden und insbesondere Mahlgutablagerungen im Fühlstutzen nicht mehr möglich sind.

Eine Rohrmanschette der eingangs genannten Art ist erfindungsgemäß dadurch gekennzeichnet, daß der Deckel einen den Stutzen vollständig ausfüllenden Stopfen mit einer zylindrisch ausgerundeten, der Innenfläche der Rohrmanschette angepaßten Stirnfläche aufweist.

Damit wird der Vorteil erreicht, daß die durchgehende Rohrleitung im Bereich des seitlichen Stutzens keinen Totraum aufweist, in dem sich Mahlgut ablagern kann. Vielmehr bildet die Stirnfläche des

- 4 -

am Deckel angeformten Stopfens eine glattzylindrische Fortsetzung der Innenfläche der Rohrmanschette bzw. der Rohrleitung.

In weiterer vorteilhafter Ausgestaltung der Erfindung verläuft der Stutzen rechtwinklig zur Achse der Rohrmanschette. Die Rohrmanschette kann daher in beiden Richtungen eingebaut werden, und durch den Stutzen kann ein Reinigungswerkzeug nach beiden Richtungen hin in die Rohrleitung eingeführt werden.

Vorteilhafterweise ist der Deckel am Stutzen durch formschlüssige Befestigungsmittel gegen Herausziehen gesichert, insbesondere durch einen Bajonettverschluß. Diese Befestigungsmittel sind vorzugsweise so gestaltet, daß sie das Einsetzen des Deckels nur in der richtigen Lage, in der seine ausgerundete Stirnfläche fluchtend mit der Innenfläche der Rohrmanschette verläuft, zulassen. Der Deckel ist ferner vorzugsweise mit einer die richtige Einbaustellung anzeigenden Markierung versehen.

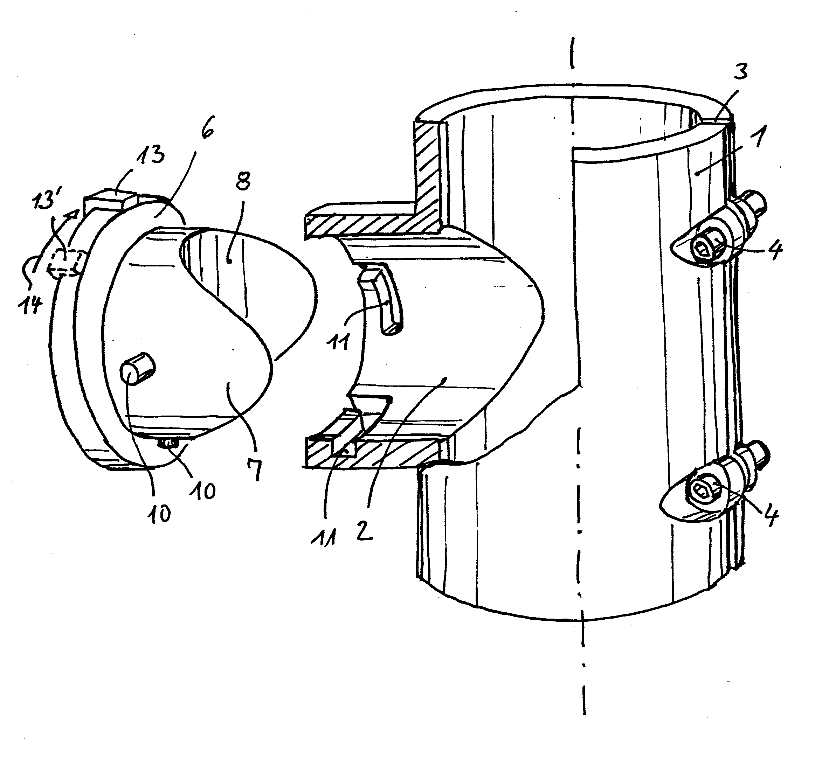

Eine Ausführungsform der Erfindung wird anhand der Zeichnung näher erläutert.

0119289

- 5 -

Eine vorzugsweise aus Kunststoff im Spritzgußverfahren hergestellte Rohrmanschette 1 weist einen
rechtwinklig zu ihrer Achse verlaufenden seitlichen
Stutzen 2 auf. Diese Rohrmanschette kann z.B. in
ein Mahlgut-Laufrohr einer Mühlenanlage oder Lebensmittelfabrik eingefügt werden, nachdem in dieses
Laufrohr an der gewünschten Stelle eine Unterbrechung oder eine seitliche Öffnung hineingeschnitten
worden ist. Zum Festspannen auf der (nicht dargestellten) Rohrleitung weist die Manschette 1 einen
Längsschlitz 3 auf und kann durch Spannmittel, z.B.
Spannschrauben 4, auf der Rohrleitung festgezogen werden.

Der Stutzen 2 wird mit einem Deckel 6 verschlossen,
an den ein Stopfen 7 angeformt ist, der den Stutzen 2
vollständig ausfüllt und dessen Stirnfläche 8 entsprechend der gedachten Verschneidung mit der inneren Mantelfläche der Rohrmanschette 1 zylindrisch
ausgehöhlt ist. Am Stopfen 7 sind zapfenartige Vorsprünge 10 ausgebildet, die zusammen mit entsprechenden Einführschlitzen 11 des Stutzens 2 einen
Bajonettverschluß bilden, durch den der Deckel 6
formschlüssig am Stutzen 2 gegen axiales Heraus-

- 6 -

drücken festgehalten wird. Die Zapfen 10 und Schlitze
11 sind derart angeordnet, daß der Deckel 6 nur in
der korrekten Stellung, in der die Stirnfläche 8 mit
der Innenfläche der Rohrmanschette 1 fluchtet, einsetzbar ist, nicht aber in der dazu um 90° verdrehten
Stellung. Bei dem Ausführungsbeispiel ist zu diesem
Zweck ein Schlitz 11 am oberen Scheitelpunkt des
Stutzens 2 weggelassen worden. Das gleiche läßt sich
jedoch auch dadurch erreichen, daß Länge und/oder
Durchmesser der Zapfen 10 bzw. Breite und/oder Tiefe
der Schlitze 11 unterschiedlich gewählt werden.

Der Deckel 6 kann auch eine Markierung 13 aufweisen, die durch ihre Lage, z.B. senkrecht nach oben
zeigen, den korrekten Einbauzustand des Deckels 6 anzeigt. Beim Einsetzen des Deckels 6, wenn die Zapfen
10 in die Einführöffnungen der Schlitze 11 eintreten,
befindet sich die Markierung in der bei 13' angeordneten Lage. Durch Drehen des Deckels entsprechend
dem Pfeil 14 bis zum Anschlag der Zapfen 10 an den
Enden der Schlitze 11 wird der Deckel ordnungsgemäß
befestigt und gelangt die Markierung in die nach
oben zeigende Lage 13. Am Stutzen 2 kann eine (nicht dargestellt) Hilfsmarkierung angebracht werden, die beim Einführen der Zapfen 10 in die Schlitze 11 mit der in der Stellung 13' befindlichen Markierung des Deckels fluchtet und das Einführen der Zapfen 10 erleichtert.

- 1 -  A 75

Dr. Hans Sallhofer
Bahnhofstr. 36
A-5280 Braunau

Rohrmanschette mit durch Deckel verschließbarem Zugangsstutzen für Rohrleitungen

P a t e n t a n s p r ü c h e

1. Rohrmanschette mit durch Deckel verschließbarem Zugangsstutzen für Rohrleitungen, insbesondere zur Verwendung als Inspektions- und Reinigungsverschluß für Laufrohre in Mühlenanlagen, dadurch
gekennzeichnet , daß der Deckel (6)
einen den Stutzen (2) vollständig ausfüllenden
Stopfen mit einer zylindrisch ausgerundeten, der
Innenfläche der Rohrmanschette (1) angepaßten Stirnfläche (8) aufweist.

2. Rohrmanschette nach Anspruch 1, dadurch g e - k e n n z e i c h n e t , daß der Stutzen (2) rechtwinklig zur Achse der Rohrmanschette (1) verläuft.

3. Rohrmanschette nach Anspruch 1, dadurch g e - k e n n z e i c h n e t , daß der Deckel (6) am Stutzen (2) durch formschlüssige Befestigungsmittel (10, 11) gegen axiales Herausziehen gesichert ist.

4. Rohrmanschette nach Anspruch 3, dadurch g e - k e n n z e i c h n e t , daß die Befestigungsmittel (10, 11) als Bajonettverschluß ausgebildet sind.

5. Rohrmanschette nach Anspruch 3 und 4, dadurch g e k e n n z e i c h n e t , daß die Befestigungs- mittel(10,11) als Führungen ausgebildet sind, die das Einsetzen des Deckels (8) nur in der Lage, in der eine Stirnfläche (8) mit der Innenfläche der Rohrmanschette (1) fluchtet, zulassen.

6. Rohrmanschette nach einem der Ansprüche 1 bis 5, dadurch g e k e n n z e i c h n e t , daß am Deckel (6) eine seine korrekte Einbaulage anzeigende Markierung (13) vorgesehen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 677 301 (WILLIAMS)<br>* Spalte 2, Zeile 41 - Spalte 4, Zeile 7; Figuren 1,2,5 * | 1-5 | F 16 L 45/00<br>F 16 L 55/10<br>F 16 L 55/12 |
| A | GB-A- 801 784 (AUTOMOTIVE PRODUCTS)<br>* Ansprüche 1,6 * | 1,3,4 | |
| A | CH-A- 290 687 (MIAG)<br>* Spalte 1, Zeilen 1-27 * | 1,2,5 | |
| | | | **RECHERCHIERTE SACHGEBIETE (Int. Cl. 3)**<br><br>F 16 L<br>F 16 K<br>B 65 D |

Der vorliegende Recherchenbericht wurde für alle Patentansprüche erstellt.

| Recherchenort | Abschlußdatum der Recherche | Prüfer |
|---|---|---|
| DEN HAAG | 18-11-1983 | SCHAEFFLER C.A.A. |